# EUROPEAN PATENT SPECIFICATION

(11) **EP 3 675 290 B1**
(45) Date of publication and mention of the grant of the patent: **26.01.2022**
(21) Application number: 18001017.5
(22) Date of filing: 28.12.2018
(51) Int. Cl.: H01R 13/66, H01R 13/70, H01R 24/78, H02G 3/10, H01R 25/00

(54) **ELECTRICAL OUTLET AND METHOD**
STROMSTECKDOSE UND VERFAHREN
PRISE ÉLECTRIQUE ET PROCÉDÉ

(43) Date of publication of application: 01.07.2020
(73) Proprietor: Vestel Elektronik Sanayi ve Ticaret A.S., 45030 Manisa (TR)
(72) Inventor: Erdinc, Cihan, 45030 Manisa (TR); Karatas, Mustafa, 45030 Manisa (TR)
(74) Representative: Kehl, Ascherl, Liebhoff & Ettmayr Patentanwälte Partnerschaft mbB

(56) References cited:
- WO-A1-2018/148089
- US-A1- 2002 097 546
- US-A1- 2005 264 383
- US-A1- 2009 081 902

## Description

### TECHNICAL FIELD

The invention relates to an electrical outlet. Further, the present invention relates to a respective method.

### BACKGROUND

Although applicable to any type of power connection, the present invention will mainly be described in conjunction with electrical outlets installed in walls.

Electrical outlets are devices that allow electrically operated equipment to be connected to the primary power supply in a building.

Electrical plugs and sockets differ in voltage and current rating, shape, size and type of connectors. Usually the mains power supply will provide electrical AC-power with a voltage of 110 V or 230 V and a frequency of 60 Hz or 50 Hz. Usually, the plug is the movable connector attached to an electrically operated device's mains cable. The socket or outlet is fixed on equipment or a building structure and connected to an energized electrical network.

To reduce the risk of users accidentally touching energized conductors, plug and socket systems usually incorporate mechanical safety features in addition to the recessed slots or holes of the energized socket. Such safety features may include plugs with insulated sleeves, recessed sockets, sockets with blocking shutters, and sockets designed to accept only compatible plugs inserted in the correct orientation.

Electrical outlets that are mounted in a wall, can however be pulled out of the wall by force exerted by users, e.g. when removing a plug from a socket.

Document US 2002 / 097 546 A1 discloses an electrical safety outlet for accepting a plug to provide power to electrical appliances with a intelligent circuit that determines operating parameters of the outlet and controls power supply to the outlet. Document US 2005 / 264 383 A1 discloses a circuit interrupting device for interrupting power output of an electrical outlet in case of an error. Document WO 2018 / 148 089 A1 discloses a connector assembly with a ferrule and a force sensor.

There is a need for electrical outlets with improved isolation features.

### SUMMARY OF THE INVENTION

The above stated problem is solved by the features of the independent product claim 1 and method claim 10.

The present invention is based on the finding that usually electrical outlets when correctly installed do not allow a user to touch any power-carrying parts of the electrical outlet. However, e.g. by force, an electrical outlet may be at least partially removed from the wall it is installed in. In this state it may be possible for a user to accidentally touch a power-carrying part of the electrical outlet.

The present invention takes into account this finding and provides a kind of actively monitored electrical outlet.

The electrical outlet comprises a carrier. The carrier may e.g. be a plastic or metal carrier that severs as a structure that accommodates all electrical and mechanical elements of the electrical outlet. It is understood, that the carrier may be a single-part or multi-part carrier designed in any required shape. The carrier may also comprise a housing, fixation elements and the like.

Arranged on the carrier are at least one phase input and at least one neutral input. The inputs serve to connect the electrical outlet to the respective cables that are e.g. installed in a wall.

For every phase input there is a corresponding phase pin, also referred to as contact, provided on the carrier and electrically connected to the respective phase input. It is understood, that the phase pins will usually be female pins. The term pin in this context is meant to comprise any type of single-phase electrical connection element that may be used in an electrical outlet. Further, there is provided at least one neutral input on the carrier. At least one neutral pin is also provided on the carrier and electrically connected to the neutral input. It is understood, that a single neutral input may be provided for multiple neutral pins. The neutral pins will usually also be female pins.

Although not explicitly mentioned, it is understood, that additionally a ground input and ground pins may be provided. It is further understood, that the electrical outlet according to the present invention may conform, to any standardized format for electrical outlets, as e.g. standardized by the US Department of Commerce International Trade Administration (ITA). There are currently 15 types of electrical outlet plugs in use today, each of which has been assigned a letter starting by the letter A.

In addition to the electrical contacts or pins, the electrical outlet further comprises a switch for every phase input. With a switch the path between the phase input and the respective phase pin can be interrupted if required. Mechanically the switches may be positioned such that the user may not touch the input side to the switches even if the electrical outlet is partially removed from the wall it is installed in.

Possible switches for example comprise electromechanical relays or solid-state switches or the like.

In order to control the switches, the present invention provides the deactivation unit that monitors the correct installation, especially the mechanical installation, of the electrical outlet. If the electrical outlet is determined not to be correctly installed, the deactivation unit will control the switches to open, thus rendering powerless all elements or parts that sit electrically after the switches.

The electrical outlet of the present invention therefore makes sure that as soon as the electrical outlet or any part of the electrical outlet is removed from its proper position the electrical outlet is deactivated. Users touching parts of the electrical outlet that protrude from the wall after a partial removal of the electrical outlet will therefore not suffer any electrical shock.

Further embodiments of the present invention are subject of the further subclaims and of the following description, referring to the drawings.

In an embodiment, the at least one phase input and the at least one neutral input may be arranged on the back of the electrical outlet, e.g. facing into the wall on which the electrical outlet is provided.

The inputs being arranged on the back of the electrical outlet may refer to the inputs being arranged opposite to the surface of the electrical outlet facing the user or on a side of the electrical outlet that is covered when the electrical outlet is properly installed. Therefore, the inputs cannot be touched by a user, even if the electrical outlet is removed partially from the wall.

In order to provide the inputs on the back of the electrical outlet the carrier may comprise respective protrusions or recesses on the back or sides that accommodate the inputs.

In another embodiment, the carrier may comprise an input carrying element and a separate pin carrying element, wherein the at least one neutral input and the at least one phase input and the switches may be arranged on the input carrying element, and wherein the at least one neutral pin and the at least one phase pin may be arranged on the pin carrying element, and wherein the switches may be electrically coupled, e.g. by cables, to the phase pins.

A multi-part carrier with the input carrying element and the pin carrying element physically separates the part that is electrically connected to mains power and the part that may be touched by a user. Therefore, even if the electrical outlet is (partially) removed from the wall, only the part that carries the pins will be open to access by the user. This situation will however be detected by the deactivation unit and the pins will be rendered powerless. Only if the user willingly removes the complete electrical outlet will he have access to the power carrying parts.

In a further embodiment, the deactivation unit may comprise at least one force sensor configured to detect mechanical force that is generated while the electrical outlet is correctly installed. Further, the deactivation unit may comprise a control unit configured to evaluate an output of the at least one force sensor and control the switches accordingly.

Usually the electrical outlet will be installed on a wall or an equipment housing. In this case the wall or equipment housing will form a bearing which supports the electrical outlet, or at least parts of the electrical outlet. Therefore, specific parts of the electrical outlet, e.g. parts of the carrier, will be in contact with the wall or housing. Further, screws may be used to fix the electrical outlet to the wall. Therefore, a specific force or pressure will exist between the wall or equipment housing and the respective part of the electrical outlet.

With a force sensor this force may be measured and then evaluated by the control unit. The control unit may for example assume the electrical outlet to be at least partially removed from its position, if the force that is measured is below a specific threshold or is zero.

It is understood, that the force sensors may comprise any type of sensor capable of detecting a force. Possible sensors provide an output voltage in respect to an applied force. Such sensors may e.g. be force-sensitive resistors.

Another type of sensor may be a simple switch that provides a switching signal. Such a switch may e.g. comprise a spring-loaded button that is pushed out by the spring when the electrical outlet is removed, therefore either closing or opening an electric contact that may then be sensed by the control unit.

Especially if switches are used that close a contact when the button is pushed out by the spring, the deactivation unit may be arranged such that it is only powered when the switch closes the contact. In this arrangement, the electrical outlet will not consume any electrical power for the deactivation unit while the switch button is pressed, i.e. while the electrical outlet is correctly installed.

In yet another embodiment, the control unit may comprise a comparator and may be configured to compare the signal of the force sensors each to a threshold value and control the switches to open if one of the sensor signals is lower than the threshold value.

The control unit may e.g. comprise discrete elements. As alternative, the control unit may also comprise a processor that executes respective instructions to compare the sensor signals to the threshold values. The processor may e.g. be embedded in a microcontroller that may also comprise respective analog-to digital or A/D-converters. Further, amplifiers and any other required element for conditioning the sensor signals may be provided.

In a further embodiment, the electrical outlet may comprise a number of fixation elements configured to mechanically fix the electrical outlet and at least one force sensor for each one of the fixation elements.

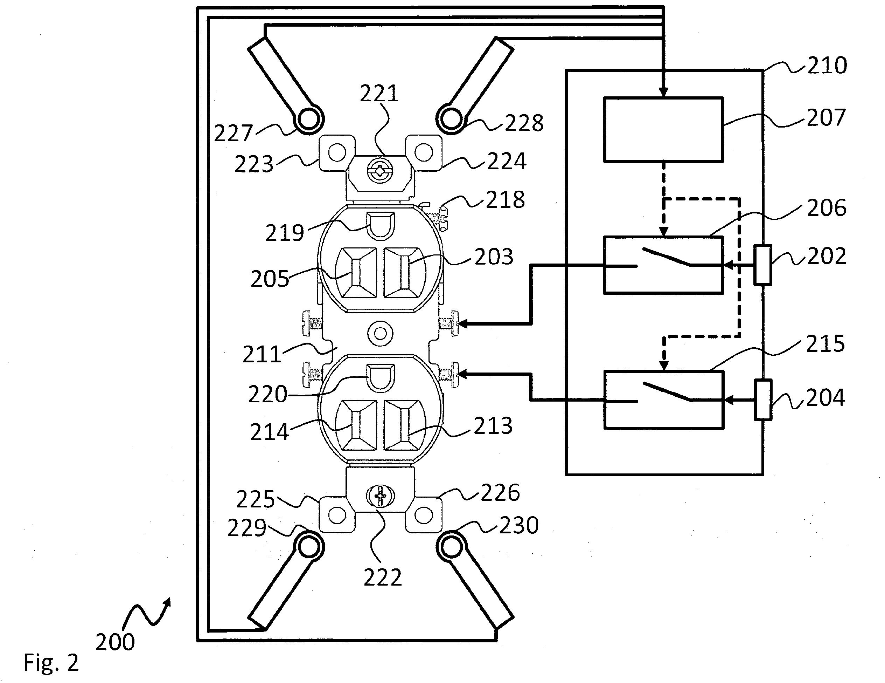

The term fixation element may refer to single screws or clips as well as to mechanical arrangements that serve as support or contact area and may comprise screws or clips or to any other supporting element of the electrical outlet. For example, some types of outlets, like e.g. used in Turkey or the USA, may comprise a support plate on the upper and the lower end with "ears" (see e.g. Fig. 2) that may serve as fixation or support elements. Therefore, a single force sensor may be installed on every one of these "ears".

In another embodiment, the control unit may be configured to control the switches to open if all force sensors provide a signal that is below the threshold value. In addition or as alternative, the control unit may be configured to debounce the respective sensor signals if less than all sensors provide a signal that is below the threshold value and control the switches to open if the respective force sensors provide signals that are below the threshold value after debouncing the signals.

If all force sensors provide a signal that is below the threshold value it may be assumed that the electrical outlet is at least partially removed from the wall and should be deactivated.

However, if only some of the sensors provide such a signal, this situation may e.g. be caused by the user inserting a plug into or pulling out a plug from the electrical outlet. In this situation the electrical outlet should not be deactivated.

Debouncing in this context may e.g. refer to repeatedly analyzing the respective force sensor signal and only assuming the force sensor signal to be valid if it keeps the same value or a value within a predetermined signal range for a predetermined amount of time, e.g. 1 s, 500 ms or the like. Especially in case of the above-mentioned switches that close the contact when the button is pushed out by the spring, debouncing may e.g. be performed with a capacitor circuit.

If after debouncing the signal still indicates a low force on the respective sensor, the electrical outlet may be assumed not to be correctly installed. The switches may therefore be opened by the deactivation unit.

In a further embodiment, the electrical outlet may comprise a power supply unit configured to supply the deactivation unit with electrical power, wherein the power supply unit may comprise an energy storage, like e.g. a battery.

Providing an energy storage in the power supply unit allows operating the deactivation unit autonomously. In order to increase the life-time of the energy storage, the deactivation unit may e.g. comprise a low-power microcontroller. Such microcontrollers consume very little power and may therefore be operated in some cases for multiple years on a single battery. It is understood, that any other type of energy storage, like e.g. a capacitor, may also be used.

In addition, a low power indicator may be provided that may indicate to a user if the power level of the energy storage is low. It is understood, that such a power indicator may be dimensioned to still be operational on a power level that does not allow operating e.g. the deactivation unit any more. The low power indicator may e.g. be a visual indicator, like a LED, or an audible indicator, like a beep generated by a speaker.

In yet another embodiment, the electrical outlet may comprise a power supply unit configured to supply the deactivation unit with electrical power, wherein the power supply unit may comprise a power converter that is coupled to one of the phase inputs.

The power converter may be a power converter that may be directly coupled to the phase input. Such a converter may e.g. comprise a transformer to convert the mains power voltage level into a voltage level suitable for operation of the deactivation unit. Further, such a power supply may be electrically isolated. This prevents users from touching any power-carrying part.

As alternative, the power supply may also be inductively coupled to the phase input. This means that there is no direct electrical or physical contact between the power supply and the phase input. The electrical power is therefore inductively transferred when an electrical device is operated through the electrical outlet and AC electrical current flows through the phase input. In order to further operate the deactivation unit when no electrical device is operated, the inductive power supply may be combined with the above-mentioned energy storage. This allows bridging times where no electrical device is operated and continuously monitoring the electrical outlet.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an electrical outlet according to the present invention,
Fig. 2 shows a block diagram of another embodiment of an electrical outlet according to the present invention,
Fig. 3 shows a block diagram of another embodiment of an electrical outlet according to the present invention,
Fig. 4 shows a block diagram of another embodiment of an electrical outlet according to the present invention, and
Fig. 5 shows a flow diagram of an embodiment of a method according to the present invention.

In the figures like reference signs denote like elements unless stated otherwise.

### DETAILED DESCRIPTION OF THE DRAWINGS

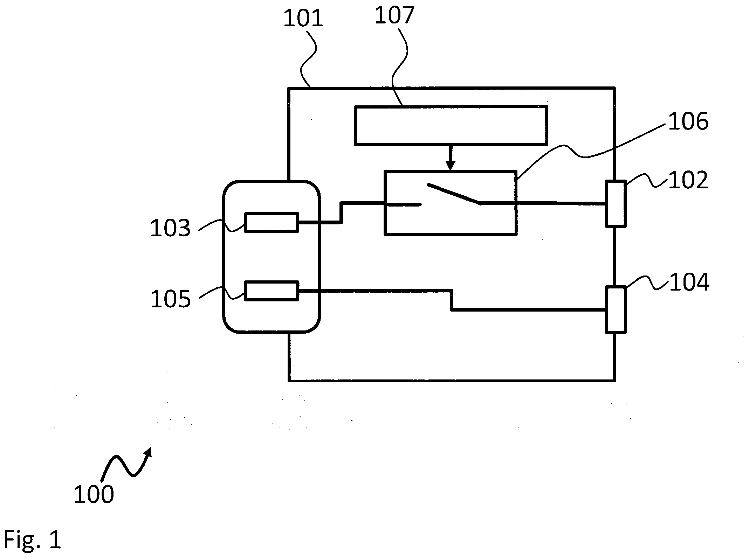

Fig. 1 shows a block diagram of an electrical outlet 100. The electrical outlet 100 comprises a carrier 101. On the carrier 101 a phase input 102 and a neutral input 104 are arranged. Further, a phase pin 103 and a neutral pin 105 are provided on the carrier 101. The phase input 102 is electrically connected to the phase pin 103 via switch 106. The neutral input 104 is directly connected to the neutral pin 105. Further, a deactivation unit 107 is provided on the carrier 101 that controls the switch 106.

It is understood, that although the electrical outlet 100 comprises only one phase, other embodiments may comprise multiple phases, e.g. three. In such an embodiment, three phase inputs, three switches and three phase pins may be provided. Further, although the electrical outlet 100 comprises no switch between the neutral input 104 and the neutral pin 105, it is understood, that in other embodiments, a switch may also be provided between the neutral input 104 and the neutral pin 105. Such an additional switch may be controlled by the deactivation unit 107 like switch 106.

The phase input 102 serves for connecting the electrical outlet 100 to the phase line of the mains power at the point of installation of the electrical outlet 100. Accordingly, the neutral input 104 serves for connecting the electrical outlet 100 to the neutral line of the mains power at the point of installation of the deactivation unit 107. The phase input 102 and the neutral input 104 may e.g. comprise clamps, luster terminals, insulating screw points or the like.

The phase pin 103 and the neutral pin 105 server to connect a power cord of an electronic device to the electrical outlet 100. They may therefore e.g. be provided as female pins 103, 104, where respective male pins of the respective plug or connector may be inserted.

The switch 106 serves to controllably interrupt the electrical connection between the phase input 102 and the phase pin 103. The unit that controls the switch 106 is provided in the form of deactivation unit 107.

The deactivation unit 107 monitors the electrical outlet 100 for correct installation. The terms "correct installation" refer to the mechanical installation of the electrical outlet 100, e.g. in a respective wall box or in the housing of an electrical equipment. If the deactivation unit 107 detects the electrical outlet 100 not to be correctly installed, the deactivation unit 107 will control the switch 106 to open and therefore interrupt the electrical connection between the phase input 102 and the phase pin 103.

Although not shown in Fig. 1, it is understood, that the deactivation unit 107 may comprise or may be coupled to one or more sensors for detecting the incorrect installation of the electrical outlet 100. Such sensors may e.g. include force sensitive sensors, switches, optical sensors, magnetic sensors or any other type of sensor.

The switch 106 may e.g. be provided as small form factor relay that may be integrated with the deactivation unit 107 in the electrical outlet 100, e.g. on the carrier 101.

The electrical outlet 100 is shown as a schematic drawing. Therefore, the positions of the inputs 102, 104 in an actual implementation may vary. It is for example possible to provide the inputs 102, 104 on the back of the electrical outlet 100 (while front refers to the face of the electrical outlet 100 that is accessibly by users when the electrical outlet 100 is installed correctly).

Providing the inputs 102, 104 on the back will put them in a position, where the inputs 102, 104 and cables connected to the inputs will move out of the installation space of the electrical outlet 100 last, when the electrical outlet 100 is removed. Therefore, if the electrical outlet 100 is accidentally removed, the voltage carrying parts are the last ones to be accessible by a user. Until these parts are accessible, the deactivation unit 107 may therefore already have opened the switch 106.

As will be shown in Fig. 2, the inputs 102,104 and the switch 106 may also be provided on a separate carrier element. Such an element may be configured such that it is not removed from the installation space with the main body of the electrical outlet 100. Therefore, after opening switch 106 no voltage carrying parts will be accessible by a user. The separate carrier element may e.g. be installed such that only a technician may remove it with adequate tools.

Fig. 2 shows a block diagram of another electrical outlet 200. In the electrical outlet 200 the carrier is provided as a two-part carrier comprising an input carrying element 210 and a pin carrying element 211. The phase input 202 and the neutral input 204 are arranged on the input carrying element 210. Further, switches 206, 215 are provided on the input carrying element 210, wherein input of switch 206 is electrically coupled to phase input 202, and wherein input of switch 215 is electrically coupled to neutral input 204. As explained above, the switch for neutral input 204 is optional and may e.g. serve for deactivating phase power, if the phase line is switched with the neutral line when installing the electrical outlet 200. The input carrying element 210 also carries the deactivation unit 207. The deactivation unit 207 as explained above controls the switches 206, 215. To this end, in the electrical outlet 200 the deactivation unit 207 is coupled to four force sensitive sensors 227, 228, 229, 230 that are arranged on fixation elements 221, 222 of the electrical outlet 200.

The fixation elements 221, 222 are provided with or as part of the pin carrying element 211. The pin carrying element 211 carries the pins that serve for contacting the electrical outlet 200 with an electrical power plug. As can be seen, the electrical outlet 200 is provided as a dual outlet and therefore comprises two phase pins 203, 213, and two neutral pins 205, 214. In addition, the electrical outlet 200 comprises a ground input 218 provided as a screw point and two corresponding ground pins 219, 220. In each case a group of one phase pin 203, 213, one neutral pin 205, 214 and on ground pin 219, 220 form a socket for a connector. The two sockets are arranged on the vertical axis of the pin carrying element 211 of the electrical outlet 200. The outputs of switches 206, 215 are coupled to screw points 216, 217 on the pin carrying element 211 e.g. via electrically isolated wires or cables.

As can be seen, the fixation elements 221, 222 extend on the vertical axis above and below the pin carrying element 211 and are mechanically coupled to the pin carrying element 211. Each of the fixation elements 221, 222 may be fixed with a screw, e.g. to a wall or a mounting box for the electrical outlet 200. Further, additional support elements 223, 224, 225, 226 that form kind of "ears" extend on the corners of the fixation elements 221, 222. Two support elements 223, 224 and 225, 226 are provided for every fixation element 221, 222.

Further, the electrical outlet 200 comprises the four force sensitive sensors 227, 227, 229, 230, where one of the force sensitive sensors 227, 227, 229, 230 is provided for each one of the support elements 223, 224, 225, 226. The force sensitive sensors 227, 227, 229, 230 will be installed between the support elements 223, 224, 225, 226 and the underlying wall. This arrangement allows the force sensitive sensors 227, 227, 229, 230 to sense the force that is provided by the screws in the fixation elements 221, 222 being tightened.

The force sensitive sensors 227, 227, 229, 230 are coupled to the deactivation unit 207. Therefore, the deactivation unit 207 may sense the force exerted on each one of the force sensitive sensors 227, 227, 229, 230. The deactivation unit 207 may then decide based on the sensor values provided by the force sensitive sensors 227, 227, 229, 230 if the electrical outlet 200 is correctly installed.

If for example all force sensitive sensors 227, 227, 229, 230 provide a sensor value above zero or above a predetermined threshold, the deactivation unit 207 may assume that the fixation elements 221, 222 are correctly fixed to the wall or equipment housing. If however a screw on the fixation elements 221, 222 comes loose at least one of the force sensitive sensors 227, 227, 229, 230 will probably measure a very low force or a force of zero.

It is understood, that the predetermined threshold for the measured force may e.g. be preconfigured in the deactivation unit 207. As alternative, a configuration mode may be activated in the deactivation unit 207. In this mode, the deactivation unit 207 may e.g. store the currently measured force values from the force sensitive sensors 227, 227, 229, 230 as standard values for correct installation. Therefore, if the configuration mode is activated after correct installation of the electrical outlet 200, the force values for a correct installation will be stored. Every force value below a predetermined interval or distance from the recorded values may therefore indicate a loosening of the electrical outlet 200. The deactivation unit 207 may therefore comprise a comparator to compare the sensor values to the respective threshold values.

The deactivation unit 207 may e.g. control the switches 206, 215 to open if at least one of the sensor signals is lower than the threshold value. Further, the deactivation unit 207 may debounce the respective sensor signals if less than all sensors 227, 228, 229, 230 provide a signal that is below the threshold value and control the switches 206, 215 to open if the respective force sensors 227, 228, 229, 230 provide signals that are below the threshold value after debouncing the signals.

The configuration mode may e.g. be triggered by interrupting mains power supply to the deactivation unit 207 in a specific pattern. The configuration mode may alternatively be initiated every time the mains power is turned on at the electrical outlet 200.

It is understood, that the deactivation unit 207 may e.g. comprise a microcontroller, processor or the like that comprises respective computer readable instructions that when executed perform the required functions.

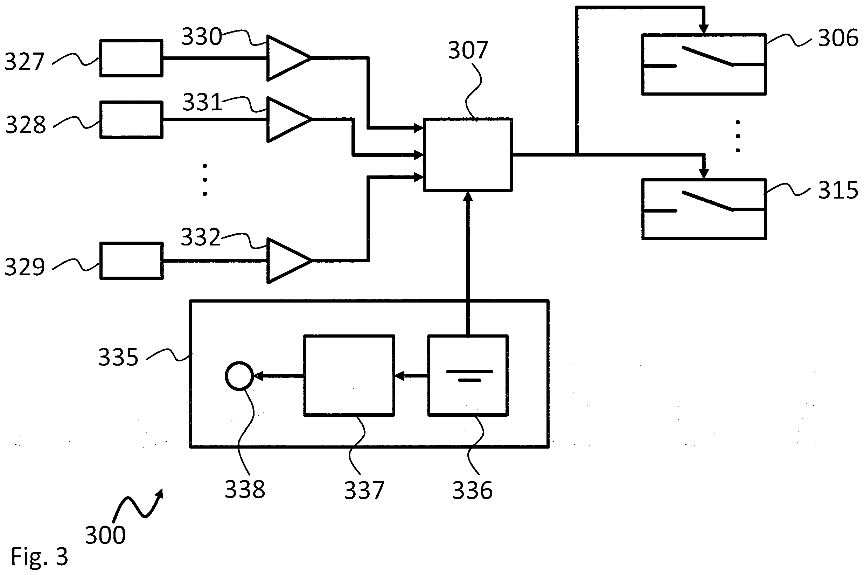

Fig. 3 shows a block diagram of another electrical outlet 300. In the electrical outlet 300 a deactivation unit 307 is provided to control a plurality of switches 306, 315. Although only two switches 306, 315 are shown more switches are possible. For example, three or four switches could be provided for a three-phase electrical outlet. Further three exemplary force sensitive sensors 327, 328, 329 are coupled via amplifiers 330, 331, 332 to the deactivation unit 307. It is understood, that any other number (more or less) of force sensitive sensors may also be provided, e.g. depending on the mechanical design of the electrical outlet.

The electrical outlet 300 further comprises a power supply unit 335 that is coupled to the deactivation unit 307. The power supply unit 335 comprises an energy storage 336, like e.g. a battery, that supplies the deactivation unit 307 with electrical power. Further, the supply unit 335 also comprises a battery monitor 337 that monitors the energy storage 336 and activates the indicator 338 if the energy storage 336 is running low on power. This will alarm a user to change or recharge the energy storage 336.

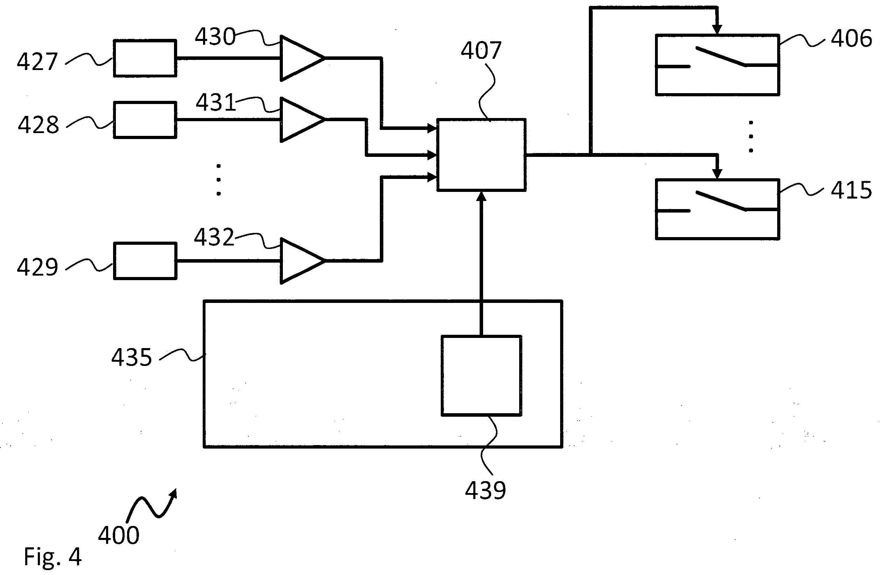

Fig. 4 shows a block diagram of another electrical outlet 400. The electrical outlet 400 is based on the electrical outlet 300. Therefore, the electrical outlet 400 also comprises a deactivation unit 407 to control a plurality of switches 406, 415. Although only two switches 406, 415 are shown more switches are possible. For example, three or four switches could be provided for a three-phase electrical outlet. Further three exemplary force sensitive sensors 427, 428, 429 are coupled via amplifiers 430, 431, 432 to the deactivation unit 407. It is understood, that any other number (more or less) of force sensitive sensors may also be provided, e.g. depending on the mechanical design of the electrical outlet.

The electrical outlet 400 further also comprises a power supply unit 435 that is coupled to the deactivation unit 407. The power supply unit 435 comprises a power converter 439 that generates a supply power for the deactivation unit 407 from the mains power, i.e. via one of the phase inputs.

It is understood, that the power converter 439 may be combined with the energy storage 336 of the electrical outlet 300. This would allow supplying the deactivation unit 407 with electrical power for a long period of time. The energy storage would only be required to bridge power outages.

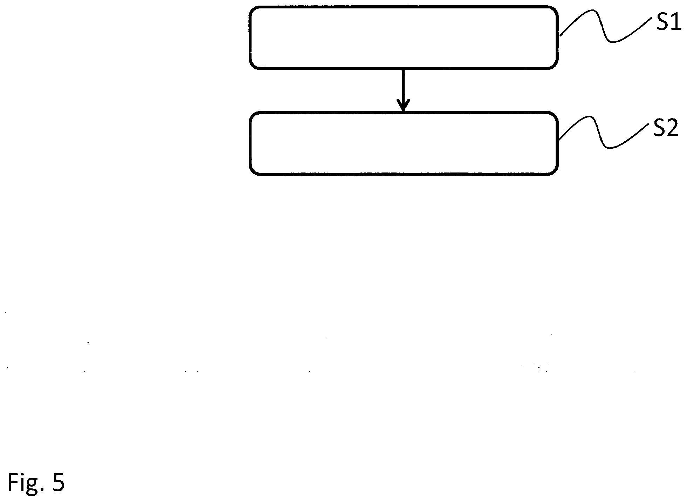

For sake of clarity in the following description of the method-based Fig. 5 the reference signs used above in the description of apparatus-based Figs. 1 - 4 will be maintained. Fig. 5 shows a flow diagram of an embodiment of a method for protecting an electrical outlet 100, 200, 300, 400 with a carrier 101 and at least one phase input 102, 202 arranged on the carrier 101 and at least one phase pin 103, 203, 213 arranged on the carrier 101.

The method comprises monitoring S1 the correct installation of the electrical outlet 100, 200, 300, 400 with a deactivation unit 107, 207, 307, 407 installed in the electrical outlet 100, 200, 300, 400, and opening S2 with the deactivation unit 107, 207, 307, 407 a switch 106, 206, 215, 306, 315, 406, 415 for every phase input 102, 202, the switch 106, 206, 215, 306, 315, 406, 415 being arranged between the phase input 102, 202 and the respective phase pin 103, 203, 213 if the electrical outlet 100, 200, 300, 400 is not correctly installed. The method may also comprise powering the deactivation unit 107, 207, 307, 407 via an energy storage 336 and/or via a power converter 439 that is coupled to one of the phase inputs 102, 202.

Opening a switch 106, 206, 215, 306, 315, 406, 415 may for example comprise in each case opening a switch 106, 206, 215, 306, 315, 406, 415 that is placed on an input carrying element 210 of the carrier 101 that is separated from a pin carrying element 211 of the carrier 101, wherein the at least one phase input 102, 202 and the switches 106, 206, 215, 306, 315, 406, 415 are arranged on the input carrying element 210, and wherein the at least one phase pin 103, 203, 213 is arranged on the pin carrying element 211, and wherein the switches 106, 206, 215, 306, 315, 406, 415 are electrically coupled to the phase pins 103, 203, 213.

To accurately detect a partial removal of the electrical outlet 100, 200, 300, 400, monitoring may comprise detecting mechanical force that is generated while the electrical outlet 100, 200, 300, 400 is correctly installed with at least one force sensor 227, 228, 229, 230, 327, 328, 329, 427, 428, 429, and evaluating an output of the at least one force sensor 227, 228, 229, 230, 327, 328, 329, 427, 428, 429 and controlling the switches 106, 206, 215, 306, 315, 406, 415 according to the evaluation results. Evaluating in this context may comprise comparing the signals of the force sensors 227, 228, 229, 230, 327, 328, 329, 427, 428, 429 each to a threshold value and controlling the switches 106, 206, 215, 306, 315, 406, 415 to open if one of the sensor signals is lower than the threshold value. The mechanical force may be detected at a number of fixation elements 221, 222 of the electrical outlet 100, 200, 300, 400 configured to mechanically fix the electrical outlet 100, 200, 300, 400.

If multiple force sensors 227, 228, 229, 230, 327, 328, 329, 427, 428, 429 are used, opening the switches may then comprise controlling the switches 106, 206, 215, 306, 315, 406, 415 to open if all force sensors 227, 228, 229, 230, 327, 328, 329, 427, 428, 429 provide a signal that is below the threshold value. As alternative, monitoring may comprise debouncing the respective sensor signals if less than all sensors 227, 228, 229, 230, 327, 328, 329, 427, 428, 429 provide a signal that is below the threshold value. Opening may then be performed only if the respective force sensors 227, 228, 229, 230, 327, 328, 329, 427, 428, 429 provide signals that are below the threshold value after debouncing the signals.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

### List of reference signs

- 100, 200, 300, 400: electrical outlet
- 101: carrier
- 102,202: phase input
- 103, 203, 213: phase pin
- 104, 204: neutral input
- 105, 205, 214: neutral pin
- 106, 206, 215, 306, 315, 406, 415: switch
- 107, 207, 307, 407: deactivation unit

- 210: input carrying element
- 211: pin carrying element

- 216, 217: screw point

- 218: ground input
- 219, 220: ground pin

- 221, 222: fixation element
- 223, 224, 225,226: support element
- 227, 228, 229, 230, 327, 328, 329: force sensor
- 427, 428, 429: force sensor
- 330, 331, 332, 430, 431, 433: amplifier

- 335, 435: power supply unit
- 336: energy storage
- 337: battery monitor
- 338: indicator

- 439: power converter
- S1, S2: method steps

## Claims

1. Electrical outlet (100, 200, 300, 400) for providing electrical power, the electrical outlet (100, 200, 300, 400) comprising:
a carrier (101),
at least one phase input (102, 202) arranged on the carrier (101) and at least one phase pin (103, 203, 213) arranged on the carrier (101),
at least one neutral input (104, 204) arranged on the carrier (101) and at least one neutral pin (105, 205, 214) arranged on the carrier (101) and electrically coupled to the at least one neutral input (104, 204),
a switch (106, 206, 215, 306, 315, 406, 415) for every phase input (102, 202) that is electrically arranged between the respective phase input (102, 202) and the corresponding phase pin (103, 203, 213), and
**characterized by**
a deactivation unit (107, 207, 307, 407) configured to monitor the correct mechanical installation of the electrical outlet (100, 200, 300, 400), e.g. in a respective wall box or in the housing of an electrical equipment, and configured to control the switches (106, 206, 215, 306, 315, 406, 415) to open if the electrical outlet (100, 200, 300, 400) is not correctly mechanically installed.

2. Electrical outlet (100, 200, 300, 400) according to claim 1, wherein the at least one phase input (102, 202) and the at least one neutral input (104, 204) are arranged on the back of the electrical outlet (100, 200, 300, 400).

3. Electrical outlet (100, 200, 300, 400) according to claim 2, wherein the carrier (101) comprises an input carrying element (210) and a separate pin carrying element (211), wherein the at least one neutral input (104, 204) and the at least one phase input (102, 202) and the switches (106, 206, 215, 306, 315, 406, 415) are arranged on the input carrying element (210), and wherein the at least one neutral pin (105, 205, 214) and the at least one phase pin (103, 203, 213) are arranged on the pin carrying element (211), and wherein the switches (106, 206, 215, 306, 315, 406, 415) are electrically coupled to the phase pins (103, 203, 213).

4. Electrical outlet (100, 200, 300, 400) according to any one of the preceding claims, wherein the deactivation unit (107, 207, 307, 407) comprises at least one force sensor (227, 228, 229, 230, 327, 328, 329, 427, 428, 429) configured to detect mechanical force that is generated while the electrical outlet (100, 200, 300, 400) is correctly installed, and wherein the deactivation unit (107, 207, 307, 407) comprises a control unit configured to evaluate an output of the at least one force sensor (227, 228, 229, 230, 327, 328, 329, 427, 428, 429) and control the switches (106, 206, 215, 306, 315, 406, 415) accordingly.

5. Electrical outlet (100, 200, 300, 400) according to claim 4, wherein the control unit comprises a comparator and is configured to compare the signals of the force sensors (227, 228, 229, 230, 327, 328, 329, 427, 428, 429) each to a threshold value and control the switches (106, 206, 215, 306, 315, 406, 415) to open if at least one of the sensor signals is lower than the threshold value.

6. Electrical outlet (100, 200, 300, 400) according to any one of claims 4 and 5, comprising a number of fixation elements (221, 222) configured to mechanically fix the electrical outlet (100, 200, 300, 400) and comprising at least one force sensor (227, 228, 229, 230, 327, 328, 329, 427, 428, 429) for every fixation element (221, 222).

7. Electrical outlet (100, 200, 300, 400) according to any one of claims 5 and 6, wherein the control unit is configured to control the switches (106, 206, 215, 306, 315, 406, 415) to open if all force sensors (227, 228, 229, 230, 327, 328, 329, 427, 428, 429) provide a signal that is below the threshold value, and/or wherein the control unit is configured to debounce the respective sensor signals if less than all sensors (227, 228, 229, 230, 327, 328, 329, 427, 428, 429) provide a signal that is below the threshold value and control the switches (106, 206, 215, 306, 315, 406, 415) to open if the respective force sensors (227, 228, 229, 230, 327, 328, 329, 427, 428, 429) provide signals that are below the threshold value after debouncing the signals.

8. Electrical outlet (100, 200, 300, 400) according to any one of the preceding claims, comprising a power supply unit (335, 435) configured to supply the deactivation unit (107, 207, 307, 407) with electrical power, wherein the power supply unit (335, 435) comprises an energy storage (336).

9. Electrical outlet (100, 200, 300, 400) according to any one of the preceding claims, comprising a power supply unit (335, 435) configured to supply the deactivation unit (107, 207, 307, 407) with electrical power, wherein the power supply unit (335, 435) comprises a power converter (439) that is coupled to one of the phase inputs (102, 202).

10. Method for protecting an electrical outlet (100, 200, 300, 400) with a carrier (101) and at least one phase input (102, 202) arranged on the carrier (101) and at least one phase pin (103, 203, 213) arranged on the carrier (101), the method being **characterized by**:
monitoring (S1) the correct mechanical installation of the electrical outlet (100, 200, 300, 400), e.g. in a respective wall box or in the housing of an electrical equipment, with a deactivation unit (107, 207, 307, 407) installed in the electrical outlet (100, 200, 300, 400), and
opening (S2) with the deactivation unit (107, 207, 307, 407) a switch (106, 206, 215, 306, 315, 406, 415) for every phase input (102, 202), the switch (106, 206, 215, 306, 315, 406, 415) being arranged between the phase input (102, 202) and the respective phase pin (103, 203, 213) if the electrical outlet (100, 200, 300, 400) is not correctly mechanically installed.

11. Method according to claim 10, wherein opening a switch (106, 206, 215, 306, 315, 406, 415) comprises in each case opening a switch (106, 206, 215, 306, 315, 406, 415) that is placed on an input carrying element (210) of the carrier (101) that is separated from a pin carrying element (211) of the carrier (101), wherein the at least one phase input (102, 202) and the switches (106, 206, 215, 306, 315, 406, 415) are arranged on the input carrying element (210), and wherein the at least one phase pin (103, 203, 213) is arranged on the pin carrying element (211), and wherein the switches (106, 206, 215, 306, 315, 406, 415) are electrically coupled to the phase pins (103, 203, 213).

12. Method according to any one of the preceding claims 10 and 11, wherein monitoring comprises detecting mechanical force that is generated while the electrical outlet (100, 200, 300, 400) is correctly installed with at least one force sensor (227, 228, 229, 230, 327, 328, 329, 427, 428, 429), and evaluating an output of the at least one force sensor (227, 228, 229, 230, 327, 328, 329, 427, 428, 429) and controlling the switches (106, 206, 215, 306, 315, 406, 415) accordingly.

13. Method according to claim 12, wherein evaluating comprises comparing the signals of the force sensors (227, 228, 229, 230, 327, 328, 329, 427, 428, 429) each to a threshold value and controlling the switches (106, 206, 215, 306, 315, 406, 415) to open if one of the sensor signals is lower than the threshold value.

14. Method according to any one of claims 12 and 13, comprising detecting mechanical force at a number of fixation elements (221, 222) of the electrical outlet (100, 200, 300, 400) configured to mechanically fix the electrical outlet (100, 200, 300, 400), and/or
wherein opening comprises controlling the switches (106, 206, 215, 306, 315, 406, 415) to open if all force sensors (227, 228, 229, 230, 327, 328, 329, 427, 428, 429) provide a signal that is below the threshold value, and/or
wherein monitoring comprises debouncing the respective sensor signals if less than all sensors (227, 228, 229, 230, 327, 328, 329, 427, 428, 429) provide a signal that is below the threshold value, wherein opening is performed only if the respective force sensors (227, 228, 229, 230, 327, 328, 329, 427, 428, 429) provide signals that are below the threshold value after debouncing the signals.

15. Method according to any one of the preceding claims 9 to 14, comprising powering the deactivation unit (107, 207, 307, 407) via an energy storage (336) and/or via a power converter (439) that is coupled to one of the phase inputs (102, 202).

## Patentansprüche

1. Elektrische Steckdose (100, 200, 300, 400) zur Bereitstellung von elektrischer Energie, wobei die elektrische Steckdose (100, 200, 300, 400) folgendes aufweist:
einen Träger (101),
mindestens einen Phaseneingang (102, 202), der auf dem Träger (101) angeordnet ist, und mindestens einen Phasenstift (103, 203, 213), der auf dem Träger (101) angeordnet ist,
mindestens einen am Träger (101) angeordneten Neutraleingang (104, 204) und mindestens einen am Träger (101) angeordneten und mit dem mindestens einen Neutraleingang (104, 204) elektrisch gekoppelten Neutralleiterstift (105, 205, 214),
einen Schalter (106, 206, 215, 306, 315, 406, 415) für jeden Phaseneingang (102, 202), der elektrisch zwischen dem jeweiligen Phaseneingang (102, 202) und dem zugehörigen Phasenstift (103, 203, 213) angeordnet ist, und
**gekennzeichnet durch**
eine Deaktivierungseinheit (107, 207, 307, 407), die so konfiguriert ist, dass sie die korrekte mechanische Installation der elektrischen Steckdose (100, 200, 300, 400) überwacht, z.B. in einer entsprechenden Wanddose oder im Gehäuse eines elektrischen Geräts, und so konfiguriert ist, dass sie die Schalter (106, 206, 215, 306, 315, 406, 415) so steuert, dass sie sich öffnen, wenn die elektrische Steckdose (100, 200, 300, 400) nicht korrekt mechanisch installiert ist.

2. Elektrische Steckdose (100, 200, 300, 400) gemäß Anspruch 1, wobei der mindestens eine Phaseneingang (102, 202) und der mindestens eine Neutraleingang (104, 204) auf der Rückseite der elektrischen Steckdose (100, 200, 300, 400) angeordnet sind.

3. Elektrische Steckdose (100, 200, 300, 400) gemäß Anspruch 2, wobei der Träger (101) ein eingangstragendes Element (210) und ein separates stifttragendes Element (211) aufweist, wobei der mindestens eine Neutraleingang (104, 204) und der mindestens eine Phaseneingang (102, 202) und die Schalter (106, 206, 215, 306, 315, 406, 415) auf dem eingangstragenden Element (210) angeordnet sind, und wobei der mindestens eine Neutralleiterstift (105, 205, 214) und der mindestens eine Phasenstift (103, 203, 213) auf dem stifttragenden Element (211) angeordnet sind, und wobei die Schalter (106, 206, 215, 306, 315, 406, 415) elektrisch mit den Phasenstiften (103, 203, 213) gekoppelt sind.

4. Elektrische Steckdose (100, 200, 300, 400) gemäß einem der vorhergehenden Ansprüche, wobei die Deaktivierungseinheit (107, 207, 307, 407) mindestens einen Kraftsensor (227, 228, 229, 230, 327, 328, 329, 427, 428, 429) aufweist, der so konfiguriert ist, dass er die mechanische Kraft erfasst, die erzeugt wird, während die elektrische Steckdose (100, 200, 300, 400) korrekt installiert ist, und wobei die Deaktivierungseinheit (107, 207, 307, 407) eine Steuereinheit aufweist, die konfiguriert ist, um eine Ausgabe des mindestens einen Kraftsensors (227, 228, 229, 230, 327, 328, 329, 427, 428, 429) auszuwerten und die Schalter (106, 206, 215, 306, 315, 406, 415) entsprechend zu steuern.

5. Elektrische Steckdose (100, 200, 300, 400) gemäß Anspruch 4, wobei die Steuereinheit einen Komparator aufweist und so konfiguriert ist, dass sie die Signale der Kraftsensoren (227, 228, 229, 230, 327, 328, 329, 427, 428, 429) jeweils mit einem Schwellenwert vergleicht und die Schalter (106, 206, 215, 306, 315, 406, 415) so steuert, dass sie sich öffnen, wenn mindestens eines der Sensorsignale niedriger als der Schwellenwert ist.

6. Elektrische Steckdose (100, 200, 300, 400) gemäß einem der Ansprüche 4 und 5, die eine Anzahl von Befestigungselementen (221, 222) aufweist, die so konfiguriert sind, dass sie die elektrische Steckdose (100, 200, 300, 400) mechanisch befestigen, und die mindestens einen Kraftsensor (227, 228, 229, 230, 327, 328, 329, 427, 428, 429) für jedes Befestigungselement (221, 222) aufweist.

7. Elektrische Steckdose (100, 200, 300, 400) gemäß einem der Ansprüche 5 und 6, wobei die Steuereinheit so konfiguriert ist, dass sie die Schalter (106, 206, 215, 306, 315, 406, 415) so steuert, dass sie sich öffnen, wenn alle Kraftsensoren (227, 228, 229, 230, 327, 328, 329, 427, 428, 429) ein Signal bereitstellen, das unter dem Schwellenwert liegt, und/oder wobei die Steuereinheit so konfiguriert ist, dass sie die jeweiligen Sensorsignale entprellt, wenn weniger als alle Sensoren (227, 228, 229, 230, 327, 328, 329, 427, 428, 429) ein Signal bereitstellen, das unter dem Schwellenwert liegt, und die Schalter (106, 206, 215, 306, 315, 406, 415) zum Öffnen steuert, wenn die jeweiligen Kraftsensoren (227, 228, 229, 230, 327, 328, 329, 427, 428, 429) Signale bereitstellen, die nach dem Entprellen der Signale unter dem Schwellenwert liegen.

8. Elektrische Steckdose (100, 200, 300, 400) gemäß einem der vorhergehenden Ansprüche, die eine Stromversorgungseinheit (335, 435) aufweist, die konfiguriert ist, um die Deaktivierungseinheit (107, 207, 307, 407) mit elektrischem Strom zu versorgen, wobei die Stromversorgungseinheit (335, 435) einen Energiespeicher (336) aufweist.

9. Elektrische Steckdose (100, 200, 300, 400) gemäß einem der vorhergehenden Ansprüche, die eine Stromversorgungseinheit (335, 435) aufweist, die so konfiguriert ist, dass sie die Deaktivierungseinheit (107, 207, 307, 407) mit elektrischem Strom versorgt, wobei die Stromversorgungseinheit (335, 435) einen Stromrichter (439) aufweist, der mit einem der Phaseneingänge (102, 202) gekoppelt ist.

10. Verfahren zum Schutz einer elektrischen Steckdose (100, 200, 300, 400) mit einem Träger (101) und mindestens einem auf dem Träger (101) angeordneten Phaseneingang (102, 202) und mindestens einem auf dem Träger (101) angeordneten Phasenstift (103, 203, 213), wobei das Verfahren **gekennzeichnet ist durch**:
Überwachen (S1) des korrekten mechanischen Einbaus der elektrischen Steckdose (100, 200, 300, 400), z.B. in einer entsprechenden Wanddose oder im Gehäuse eines elektrischen Gerätes, mit einer in der elektrischen Steckdose (100, 200, 300, 400) eingebauten Deaktivierungseinheit (107, 207, 307, 407), und
Öffnen (S2) mit der Deaktivierungseinheit (107, 207, 307, 407) eines Schalters (106, 206, 215, 306, 315, 406, 415) für jeden Phaseneingang (102, 202), wobei der Schalter (106, 206, 215, 306, 315, 406, 415) zwischen dem Phaseneingang (102, 202) und dem jeweiligen Phasenstift (103, 203, 213) angeordnet ist, wenn die elektrische Steckdose (100, 200, 300, 400) nicht korrekt mechanisch installiert ist.

11. Verfahren gemäß Anspruch 10, wobei das Öffnen eines Schalters (106, 206, 215, 306, 315, 406, 415) jeweils das Öffnen eines Schalters (106, 206, 215, 306, 315, 406, 415) aufweist, der auf einem eingangstragenden Element (210) des Trägers (101) angeordnet ist, das von einem stifttragenden Element (211) des Trägers (101) getrennt ist, wobei der mindestens eine Phaseneingang (102, 202) und die Schalter (106, 206, 215, 306, 315, 406, 415) auf dem eingangstragenden Element (210) angeordnet sind, und wobei der mindestens eine Phasenstift (103, 203, 213) auf dem stifttragenden Element (211) angeordnet ist, und wobei die Schalter (106, 206, 215, 306, 315, 406, 415) elektrisch mit den Phasenstiften (103, 203, 213) gekoppelt sind.

12. Verfahren gemäß einem der vorangehenden Ansprüche 10 und 11, wobei das Überwachen das Erfassen einer mechanischen Kraft aufweist, die erzeugt wird, während die elektrische Steckdose (100, 200, 300, 400) korrekt installiert ist, mit mindestens einem Kraftsensor (227, 228, 229, 230, 327, 328, 329, 427, 428, 429), und das Auswerten eines Ausgangs des mindestens einen Kraftsensors (227, 228, 229, 230, 327, 328, 329, 427, 428, 429) und entsprechendes Steuern der Schalter (106, 206, 215, 306, 315, 406, 415) aufweist.

13. Verfahren gemäß Anspruch 12, wobei das Auswerten aufweist, dass die Signale der Kraftsensoren (227, 228, 229, 230, 327, 328, 329, 427, 428, 429) jeweils mit einem Schwellenwert verglichen werden und die Schalter (106, 206, 215, 306, 315, 406, 415) so gesteuert werden, dass sie sich öffnen, wenn eines der Sensorsignale niedriger als der Schwellenwert ist.

14. Verfahren gemäß einem der Ansprüche 12 und 13, das das Erfassen einer mechanischen Kraft an einer Anzahl von Befestigungselementen (221, 222) der elektrischen Steckdose (100, 200, 300, 400) aufweist, die so konfiguriert sind, dass sie die elektrische Steckdose (100, 200, 300, 400) mechanisch befestigen, und/oder
wobei das Öffnen aufweist, dass die Schalter (106, 206, 215, 306, 315, 406, 415) so gesteuert werden, dass sie sich öffnen, wenn alle Kraftsensoren (227, 228, 229, 230, 327, 328, 329, 427, 428, 429) ein Signal liefern, das unter dem Schwellenwert liegt, und/oder
wobei die Überwachung ein Entprellen der jeweiligen Sensorsignale aufweist, wenn weniger als alle Sensoren (227, 228, 229, 230, 327, 328, 329, 427, 428, 429) ein Signal bereitstellen, das unterhalb des Schwellenwertes liegt, wobei das Öffnen nur dann erfolgt, wenn die jeweiligen Kraftsensoren (227, 228, 229, 230, 327, 328, 329, 427, 428, 429) Signale bereitstellen, die nach dem Entprellen der Signale unterhalb des Schwellenwertes liegen.

15. Verfahren gemäß einem der vorhergehenden Ansprüche 9 bis 14, das die Energieversorgung der Deaktivierungseinheit (107, 207, 307, 407) über einen Energiespeicher (336) und/oder über einen Stromrichter (439) aufweist, der mit einem der Phaseneingänge (102, 202) gekoppelt ist.

## Revendications

1. Prise électrique (100, 200, 300, 400) pour fournir de l'énergie électrique, la prise électrique (100, 200, 300, 400) comprenant :
un support (101),
au moins une entrée de phase (102, 202) disposée sur le support (101) et au moins une broche de phase (103, 203, 213) disposée sur le support (101),
au moins une entrée neutre (104, 204) disposée sur le support (101) et au moins une broche neutre (105, 205, 214) disposée sur le support (101) et couplée électriquement à la au moins une entrée neutre (104, 204),
un commutateur (106, 206, 215, 306, 315, 406, 415) pour chaque entrée de phase (102, 202) qui est disposé électriquement entre l'entrée de phase respective (102, 202) et la broche de phase correspondante (103, 203, 213), et
**caractérisé par**
une unité de désactivation (107, 207, 307, 407) configurée pour surveiller l'installation mécanique correcte de la prise électrique (100, 200, 300, 400), par exemple dans une boîte murale respective ou dans le boîtier d'un équipement électrique, et configurée pour commander l'ouverture des interrupteurs (106, 206, 215, 306, 315, 406, 415) si la prise électrique (100, 200, 300, 400) n'est pas correctement installée mécaniquement.

2. Prise électrique (100, 200, 300, 400) selon la revendication 1, dans laquelle l'au moins une entrée de phase (102, 202) et l'au moins une entrée de neutre (104, 204) sont disposées à l'arrière de la prise électrique (100, 200, 300, 400).

3. Prise électrique (100, 200, 300, 400) selon la revendication 2, dans laquelle le support (101) comprend un élément porteur d'entrée (210) et un élément porteur de broche séparé (211), dans laquelle la au moins une entrée neutre (104, 204) et la au moins une entrée de phase (102, 202) et les commutateurs (106, 206, 215, 306, 315, 406, 415) sont disposés sur l'élément porteur d'entrée (210), et dans lequel la au moins une broche neutre (105, 205, 214) et la au moins une broche de phase (103, 203, 213) sont disposées sur l'élément porteur de broche (211), et dans lequel les commutateurs (106, 206, 215, 306, 315, 406, 415) sont couplés électriquement aux broches de phase (103, 203, 213).

4. Prise électrique (100, 200, 300, 400) selon l'une quelconque des revendications précédentes, dans laquelle l'unité de désactivation (107, 207, 307, 407) comprend au moins un capteur de force (227, 228, 229, 230, 327, 328, 329, 427, 428, 429) configuré pour détecter une force mécanique qui est générée lorsque la prise électrique (100, 200, 300, 400) est correctement installée, et dans lequel l'unité de désactivation (107, 207, 307, 407) comprend une unité de commande configurée pour évaluer une sortie du au moins un capteur de force (227, 228, 229, 230, 327, 328, 329, 427, 428, 429) et commander les commutateurs (106, 206, 215, 306, 315, 406, 415) en conséquence.

5. Prise électrique (100, 200, 300, 400) selon la revendication 4, dans laquelle l'unité de commande comprend un comparateur et est configurée pour comparer les signaux des capteurs de force (227, 228, 229, 230, 327, 328, 329, 427, 428, 429) chacun à une valeur de seuil et commander les interrupteurs (106, 206, 215, 306, 315, 406, 415) pour ouvrir si au moins un des signaux de capteur est inférieur à la valeur de seuil.

6. Prise électrique (100, 200, 300, 400) selon l'une quelconque des revendications 4 et 5, comprenant une pluralité d'éléments de fixation (221, 222) configurés pour fixer mécaniquement la prise électrique (100, 200, 300, 400) et comprenant au moins un capteur de force (227, 228, 229, 230, 327, 328, 329, 427, 428, 429) pour chaque élément de fixation (221, 222).

7. Prise électrique (100, 200, 300, 400) selon l'une quelconque des revendications 5 et 6, dans laquelle l'unité de commande est configurée pour commander l'ouverture des interrupteurs (106, 206, 215, 306, 315, 406, 415) si tous les capteurs de force (227, 228, 229, 230, 327, 328, 329, 427, 428, 429) fournissent un signal qui est inférieur à la valeur seuil, et/ou dans laquelle l'unité de commande est configurée pour écrêter les signaux des capteurs respectifs si moins de tous les capteurs (227, 228, 229, 230, 327, 328, 329, 427, 428, 429) fournissent un signal qui est inférieur à la valeur de seuil et commander les commutateurs (106, 206, 215, 306, 315, 406, 415) pour qu'ils s'ouvrent si les capteurs de force respectifs (227, 228, 229, 230, 327, 328, 329, 427, 428, 429) fournissent des signaux qui sont inférieurs à la valeur de seuil après le débondage des signaux.

8. Prise électrique (100, 200, 300, 400) selon l'une quelconque des revendications précédentes, comprenant une unité d'alimentation (335, 435) configurée pour alimenter l'unité de désactivation (107, 207, 307, 407) en énergie électrique, dans laquelle l'unité d'alimentation (335, 435) comprend un stockage d'énergie (336).

9. Prise électrique (100, 200, 300, 400) selon l'une quelconque des revendications précédentes, comprenant une unité d'alimentation (335, 435) configurée pour alimenter l'unité de désactivation (107, 207, 307, 407) en énergie électrique, dans laquelle l'unité d'alimentation (335, 435) comprend un convertisseur de puissance (439) qui est couplé à l'une des entrées de phase (102, 202).

10. Méthode pour protéger une prise électrique (100, 200, 300, 400) avec un support (101) et au moins une entrée de phase (102, 202) disposée sur le support (101) et au moins une broche de phase (103, 203, 213) disposée sur le support (101), la méthode étant **caractérisée par** :
la surveillance (S1) de l'installation mécanique correcte de la prise électrique (100, 200, 300, 400), par exemple dans une boîte murale respective ou dans le boîtier d'un équipement électrique, avec une unité de désactivation (107, 207, 307, 407) installée dans la prise électrique (100, 200, 300, 400), et
ouvrir (S2) avec l'unité de désactivation (107, 207, 307, 407) un commutateur (106, 206, 215, 306, 315, 406, 415) pour chaque entrée de phase (102, 202), le commutateur (106, 206, 215, 306, 315, 406, 415) étant disposé entre l'entrée de phase (102, 202) et la broche de phase respective (103, 203, 213) si la prise électrique (100, 200, 300, 400) n'est pas correctement installée mécaniquement.

11. Méthode selon la revendication 10, dans laquelle l'ouverture d'un interrupteur (106, 206, 215, 306, 315, 406, 415) comprend dans chaque cas l'ouverture d'un interrupteur (106, 206, 215, 306, 315, 406, 415) qui est placé sur un élément porteur d'entrée (210) du support (101) qui est séparé d'un élément porteur de broche (211) du support (101), dans laquelle l'au moins une entrée de phase (102, 202) et les commutateurs (106, 206, 215, 306, 315, 406, 415) sont disposés sur l'élément porteur d'entrée (210), et dans lequel la au moins une broche de phase (103, 203, 213) est disposée sur l'élément porteur de broche (211), et dans lequel les commutateurs (106, 206, 215, 306, 315, 406, 415) sont couplés électriquement aux broches de phase (103, 203, 213).

12. Méthode selon l'une quelconque des revendications précédentes 10 et 11, dans laquelle la surveillance comprend la détection de la force mécanique qui est générée lorsque la prise électrique (100, 200, 300, 400) est correctement installée avec au moins un capteur de force (227, 228, 229, 230, 327, 328, 329, 427, 428, 429), et à évaluer une sortie du au moins un capteur de force (227, 228, 229, 230, 327, 328, 329, 427, 428, 429) et à commander les interrupteurs (106, 206, 215, 306, 315, 406, 415) en conséquence.

13. Méthode selon la revendication 12, dans laquelle l'évaluation comprend la comparaison des signaux des capteurs de force (227, 228, 229, 230, 327, 328, 329, 427, 428, 429) chacun à une valeur de seuil et la commande des commutateurs (106, 206, 215, 306, 315, 406, 415) pour ouvrir si l'un des signaux de capteur est inférieur à la valeur de seuil.

14. Méthode selon l'une quelconque des revendications 12 et 13, comprenant la détection d'une force mécanique sur un certain nombre d'éléments de fixation (221, 222) de la prise électrique (100, 200, 300, 400) configurés pour fixer mécaniquement la prise électrique (100, 200, 300, 400), et/ou
dans lequel l'ouverture comprend la commande des interrupteurs (106, 206, 215, 306, 315, 406, 415) pour ouvrir si tous les capteurs de force (227, 228, 229, 230, 327, 328, 329, 427, 428, 429) fournissent un signal qui est inférieur à la valeur seuil, et/ou
dans lequel la surveillance comprend la décompensation des signaux des capteurs respectifs si moins de tous les capteurs (227, 228, 229, 230, 327, 328, 329, 427, 428, 429) fournissent un signal qui est inférieur à la valeur seuil, dans lequel l'ouverture est effectuée uniquement si les capteurs de force respectifs (227, 228, 229, 230, 327, 328, 329, 427, 428, 429) fournissent des signaux qui sont inférieurs à la valeur seuil après la décompensation des signaux.

15. Méthode selon l'une quelconque des revendications précédentes 9 à 14, comprenant l'alimentation de l'unité de désactivation (107, 207, 307, 407) via un stockage d'énergie (336) et/ou via un convertisseur de puissance (439) qui est couplé à l'une des entrées de phase (102, 202).
